# EUROPEAN PATENT SPECIFICATION

(11) **EP 1 953 941 B1**
(45) Date of publication and mention of the grant of the patent: **06.05.2009**
(21) Application number: 07300715.5
(22) Date of filing: 11.01.2007
(51) Int. Cl.: H04J 14/02, H04J 3/16

(54) **WDM laser sources for PON**
WDM-Laserquellen für PON
Sources laser WDM pour PON

(43) Date of publication of application: 06.08.2008
(73) Proprietor: Alcatel Lucent, 75008 Paris (FR)
(72) Inventor: Zami, Thierry, 91300, Massy (FR)
(74) Representative: Schmidt, Werner Karl

(56) References cited:
- US-A1- 2005 175 344
- FRIGO N J ET AL: "A WAVELENGTH-DIVISION MULTIPLEXED PASSIVE OPTICAL NETWORK WITH COST-SHARED COMPONENTS" IEEE PHOTONICS TECHNOLOGY LETTERS, IEEE SERVICE CENTER, PISCATAWAY, NJ, US, vol. 6, no. 11, 1 November 1994 (1994-11-01), pages 1365-1367, XP000486198 ISSN: 1041-1135

## Description

### Technical Field

The present invention relates to a passive optical network, PON, system comprising an optical line terminal, OLT, with a first light source transmitter for generating first remote optical signals at definite wavelengths, an optical splitter connected to the first light source transmitter via a first principal optical transmission fiber to distribute each of the first remote optical signals of a specific wavelength via first secondary optical fibers to a plurality of optical network units, ONU, corresponding to subscribers with each an optical modulator. Latter is used to modulate respectively a received remote optical signal according to a data stream to be uploaded via the modulated remote optical signal as an upstream data channel from that ONU to an optical combiner via one of second secondary optical fibers. Both the optical combiner as well as the second secondary optical fibers are part of that PON system. The optical combiner forwards the modulated optical signals to a receiver of the OLT through a second principal optical transmission fiber. Furthermore, it is related also to an optical line terminal comprising the above cited characteristics.

### Background of the invention

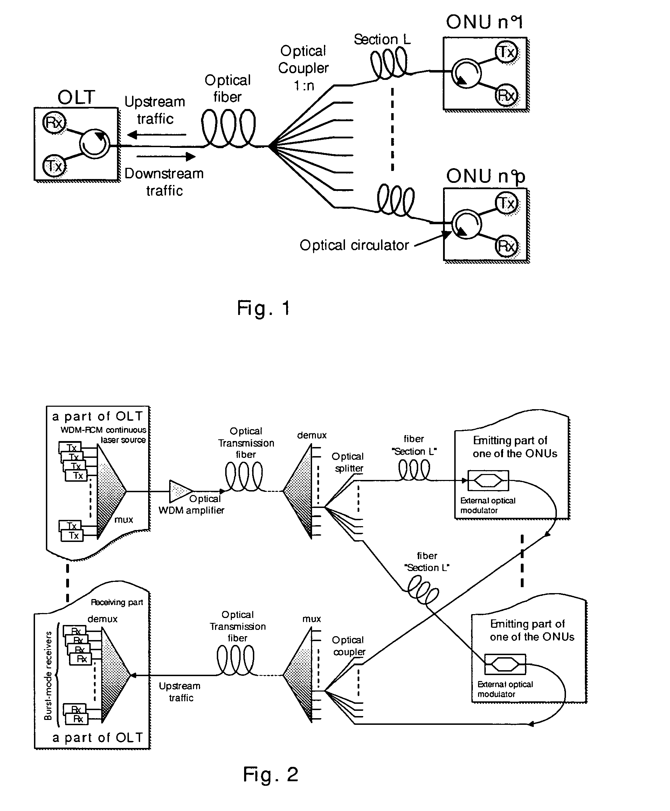

The new emerging applications require high-capacity access networks with stringent Quality of Service (QoS). The maturity of optical components and electronic circuits make the optical fiber links suitable for access networks. In such context, Passive Optical Networks (PON) e.g. as depicted in figure 1 is one of the most promising solutions. PONs have been standardized for Fiber to the Home (FTTH) solutions and are currently being deployed in the field by the operators. However only the PONs with the best performance/cost ratio will be deployed on a large scale. So it is important for an equipment vendor to propose PON architectures that meet, at the same time, the requirements in terms of performance, ease to manage and cost.

A PON typically consists of a transmitter, feeder optical fiber, a remote branching device, and an optical network unit (ONU) for each subscriber or group of subscribers. In a conventional Time Domain Multiplexing (TDM) power splitting PON, the transmitter emits an aggregated signal on a single wavelength, while the branching device splits the aggregated signal into a plurality of identical signals, each such signal being distributed to a corresponding ONU configured to receive at the aggregated bit-rate. In a wavelength division multiplexed (WDM) PON, each transmitted wavelength carries data for a single ONU and is modulated at the baseband bit rate. The TDM-PON offers low per-subscriber cost by sharing a single wavelength channel with multiple subscribers. However, it inevitably sacrifices per-subscriber bandwidth and the practical number of subscribers is typically limited to approximately 32. On the other hand, the WDM-PON incorporates more subscribers without sacrificing bandwidth by adding wavelength channels, and offers great security and protocol transparency. However, because of relatively expensive WDM components, the WDM-PON has been considered a next-generation solution to follow TDM-PONs, and most studies to combine TDM and WDM techniques for near future deployment, have not been close to commercialization.

To minimize the cost of such a PON, a lot of attention is actually paid to solutions exhibiting wavelength-independent Optical Network Units (ONU) because they avoid management of wide range of remotely located wavelength sources.

Such centralization of the wavelengths management in the Optical Line Terminal (OLT) makes the service provider keep the total control on the wavelength allocation. Such solution is usually called Remote-Color-Managed Passive Optical Network (RCM-PON). It also avoids any wavelength mismatch that can occur when installing a new WDM-PON. A lot of different implementations exist based on using a single fiber system for the downstream as well as upstream traffic as shown schematically in figure 1. One of the simplest configurations consists in sending a continuous channel (for the upstream data channel) that could be externally modulated by the ONUs. In several already existing implementations, the upstream data transmitter is realized by remodulating part of the received downstream signal power. Here, different modulation scheme are used. For example, the downstream signal carrier is left unmodulated for a certain period, which is reserved for upstream data modulation. Or, on-off keying upstream data is superimposed onto the downstream OOK signal. Also, optical differential phase shift keying modulation format with constant intensity is exploited in the downstream traffic. Alternately, optical frequency shift keying is proposed as the downstream modulation format to facilitate upstream data modulation. In general, RCM-PON is very attractive for the operator since there is no more need to deliver the source with the suitable wavelength to the subscriber. This latter can directly buy its wavelength-agnostic high-speed "modem" in any mass-market store as the current ADSL modems today.

One can think that the PON will be deployed on a very large scale on the forthcoming years. So it is important that the proposed solutions for remote color management can address up to few hundreds of subscribers. The association of TDM and WDM techniques are already envisioned to reach such capacity as depicted in figure 2. Several ONUs use the same continuous wavelength to feed their external modulator and to send their upstream traffic toward the OLT. The resulting packets are timely multiplexed in the optical coupler by synchronizing the emission of these ONUs. The WDM technique allows many of these sets of ONUs to use the same optical transmission fiber by multiplexing several different wavelengths.

Utilization of centralized light sources at the OLT in WDM-PON is an attractive approach for low-cost implementation. Since no wavelength-registered light source is incorporated at the ONU, wavelength management at the ONU is unnecessary and thus greatly eases the network maintenance. At the ONU, the upstream data transmitter is usually realized by remodulating part of the received down-stream signal power. In "A Wavelength-Division Multiplexed Passive Optical Network with Cost-Shared Components" from N.J.Frigo et al., IEEE Photonics Tech. Let., **6** (1994), 1365 is described such an example of a PON architecture comprising a single laser shared among all N bidirectional links, while each ONU provides its upstream signal by over-modulating a portion of the downstream light.

Only, the WDM sources located in the OLT require WDM optical amplification to feed the ONUs with continuous channels exhibiting enough optical power. For one WDM-RCM-PON connecting up to 512 subscribers (32 wavelengths with 16 subscribers per wavelength) it would require an optical amplifier the output power of which should exceed 28 dBm. Such amplifiers exist but they are far more expensive than conventional ones the output power of which remains around 20 dBm.

Moreover when using such amplified centralized light sources, there is another very important issue: the protection. This last feature should be considered from the beginning when designing a RCM solution. It is not clearly the case in the prior art solutions. The more the WDM source is shared between several PONs, the more crucial the protection of the common WDM source will be.

From US 2005/175344 A1, WDM PONs with redundant sets of transmitters have become known. These sets of transmitters either work in an active-standby mode or in a fully redundant mode with permanent double transmission.

### Summary of the invention

The object of the present invention is to propose new WDM-source for WDM-RCM-PONs minimizing the cost of a PON.

This object is achieved in accordance with the invention with a PON system as described above, further comprising a second light source transmitter for generating second remote optical signals at the same definite wavelengths, a third principal optical fiber for transmitting the second remote optical signals as a downstream data channel from the second light source transmitter to the optical splitter to distribute the downstream data channel of each one of the wavelengths to the plurality of ONUs via the first secondary optical fibers, the first and second transmitters being such that the first and second remote optical signals generated at the OLT for the upstream data channel are emitted non-permanently and that each one of the first remote optical signals carries the same data as one of the second remote optical signals with a same period and with a time shift to avoid interference.

In some embodiment according to the invention, the first and second remote optical signals generated at the OLT for the upstream data channel are modulated by a clock.

In a further embodiment, the PON is based on WDM technology with n different wavelengths for the remote optical signals while the light source transmitters are adapted to generate the optical signals at different wavelengths within a period T such that every T/n time optical signals of different wavelength is generated. And each of the two light source transmitters is adapted to generate at the same time optical signals of different wavelengths still being different between the two light source transmitters.

The invention further relates to an OLT for a PON with a light source transmitter generating remote optical signals for the upstream data channel as defined above.

Advantageous developments of the invention are described in the dependent claims, the following description and the drawings.

### Description of the drawings

An exemplary embodiment of the invention will now be explained further with the reference to the attached drawings in which:
Fig. 1 is a schematic view of a PON according to some prior art;
Fig. 2 is a schematic view of a PON with the upstream traffic only according to some prior art;
Fig. 3 is a schematic example of upstream packets arriving in the OLT during one period;
Fig. 4 is a schematic view of a PON with the upstream traffic only according to an embodiment of the present invention;
Fig. 5 is a schematic view of part of an OLT according to an embodiment of the present invention;
Fig. 6 discloses the layout of a RCM-ONU according to the present invention;
Fig. 7 is a schematic view of part of an OLT with a sequence of wavelengths according to the present invention.

### Detailed description of preferred embodiments

There is no need to send permanent continuous optical waves towards the ONUs. Indeed, all the ONUs that use the same wavelength i.e. which are feeded with remote optical signal at same wavelength should timely multiplex their upstream packets in the same optical coupler acting as a combiner to avoid the occurrence of interference at that coupler (see Fig. 2). Therefore, the different ONUs do not need to receive the continuous remote laser source all the same time. It is proposed in the present invention that the OLT emits intermittently the channels that should be remotely modulated by the ONUs. When optimized, such emission at sporadic intervals could contribute to reduce meaningfully the output power of the WDM optical amplifiers located at the output of the OLT and/or along the optical transmission fiber, and so the cost of these amplifiers.

When the OLT emits the "continuous" channels, they could be continuous but also modulated by a clock. Under this last assumption, a simple Non Return to Zero (NRZ) modulation carried out in the ONU at the frequency of this clock will result in a RZ modulation scheme for the upstream traffic (RZ modulation scheme is more outstanding than NRZ one in term of detection sensitivity by 1.5 dB at least).

On figure 2 is shown a PON as already used in some prior art. A similar architecture could be used when implementing the present invention taking into account that on figure 2 only the paths for the remote optical signals related to the upstream traffic is shown i.e. the paths for the downstream traffic is missing. The OLT comprises a plurality of transmitters, each emitting usually at some definite wavelength. But a single light source transmitter emitting at several wavelengths could also be chosen. All the generated remote optical signals at different wavelengths are collected through a multiplexer before leaving the OLT via a first principal optical transmission fiber. That optical transmission fiber comprises usually optical wavelength division multiplexer (mux) WDM amplifiers to amplify all the different remote optical signals at the required power according to the path length and possibly other PON properties. At the subscriber side, a demultiplexer (demux) separates the remote optical signals into the different wavelength to be forwarded to specific optical splitters. Latter allows to distribute the remote optical signals of same wavelength between a plurality of ONUs via first secondary fibers of specific section "L". Each of the ONUs itself which corresponds to subscribers comprises an optical modulator to modulate respectively the received remote optical signal according to the data stream to be uploaded via the modulated optical signal as an upstream data channel. Such upstream data channel is forwarded via second secondary fibers from the different ONUs to a coupler to be recombined and forwarded to some multiplexer (mux) before being transmitted to the OLT via a second principal optical transmission fibers. At the OLT, the upstream traffic is demultiplexed by some demultiplexer (demux) between the different wavelengths to be forwarded to respective receivers (Rx). Such plurality of receivers act as burst-mode receivers.

When implementing a PON with an OLT according to the invention, a similar architecture as shown on figure 2 can be used with the OLT generating remote optical signals at specific wavelength in a non-permanent way for the upstream data channel. Furthermore, the optical paths for optical signals of same wavelength defined from the optical splitter to the optical coupler via the respective ONU and corresponding to the first and/or second secondary optical fibers is chosen such to introduce some specific delay on the optical signal of same wavelength modulated at the respective ONU to avoid interference when combined at the combiner.

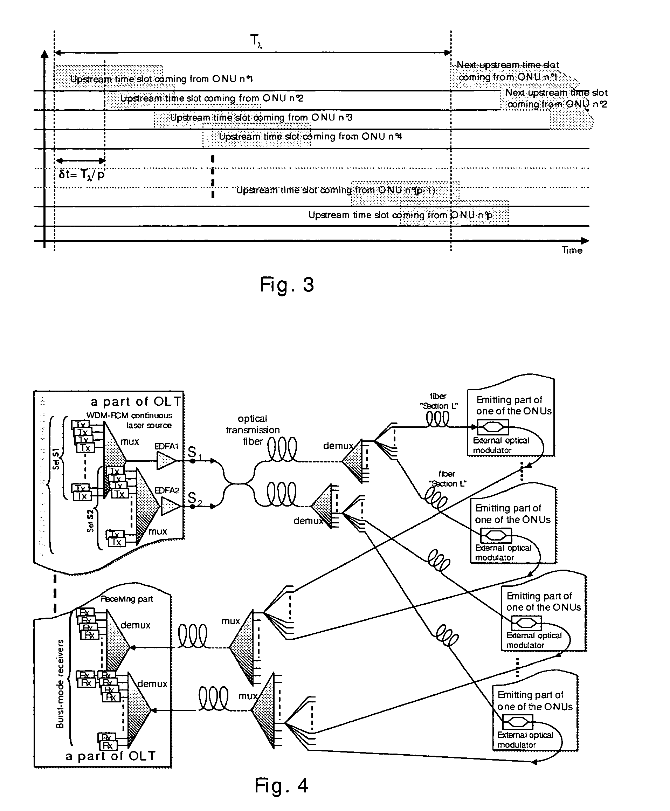

In fact, for each wavelength the emission profile of the OLT in the time domain would be likely periodic. We call T_{λ} this period associated with the wavelength λ. To maximize the whole capacity over an upstream wavelength, the whole duration of all the upstream packets (coming back to the OLT from several different ONUs operating with the wavelength λ) should be T_{λ}. As the remote "continuous" signal according to the invention in a non-permanent way remains in the optical domain, there is no way to buffer it in the ONUs in order to get the fair delays to perform the most efficient time multiplexing of the upstream packets once they have been modulated in the ONUs. The time delay between two upstream packets is set by the relative difference of their propagation time from the optical splitter to the optical combiner (see figure 2). It is the reason why this feature should be forecast from the beginning of the installation of the PON. One can tune this delay by adjusting the length of the fiber sections L. So, a fair adjustment of all the fiber sections L will lead to an optimal configuration such as a regular time delay between upstream packets coming from next ONUs as depicted in figure 3. Such adjustment is required to improve significantly the efficiency of present invention.

It is a goal of the present invention to provide time sections of continuous or "clock-modulated" light to a large number of ONUs in the framework of a WDM-RCM-PON. It implies that the common WDM source becomes a sensitive point that should be absolutely protected in case of failure of a laser or of an optical amplifier located at the output ports of the OLT. The sporadic feature of the emissions of the OLT enables an effective configuration to ensure such protection as sketched in the figure 4. As shown in figure 4, it is proposed to use 2 sets of laser sources exhibiting exactly the same wavelength so that a laser of one set can replace the laser at the same wavelength of the other set if the latter fails.

Such setup is rather classic. But now, it is proposed that both sets of lasers operate at the same time. Because of the "bursty" feature of the emission of light chunks, they need only to not emit the same wavelength at the same time to avoid detrimental interferences in the different principal optical transmission fibers. As already mentioned the laser sources will likely emits in a periodic time profile with a period denoted T_{λ}. This period is chosen identical for laser sources at the same wavelength in both sets of lasers. Hence any failure of EDFA or laser will only induce a degradation of service but not a deny of service. Because if a laser or/and an EDFA fails, the corresponding laser will be presented in the fiber when the laser at the same wavelength in the other set will emit. So for the ONUs operating at this wavelength, the failure will only result in "continuous" packet arriving rate twice slower and so an upstream capacity reduced by 50%.

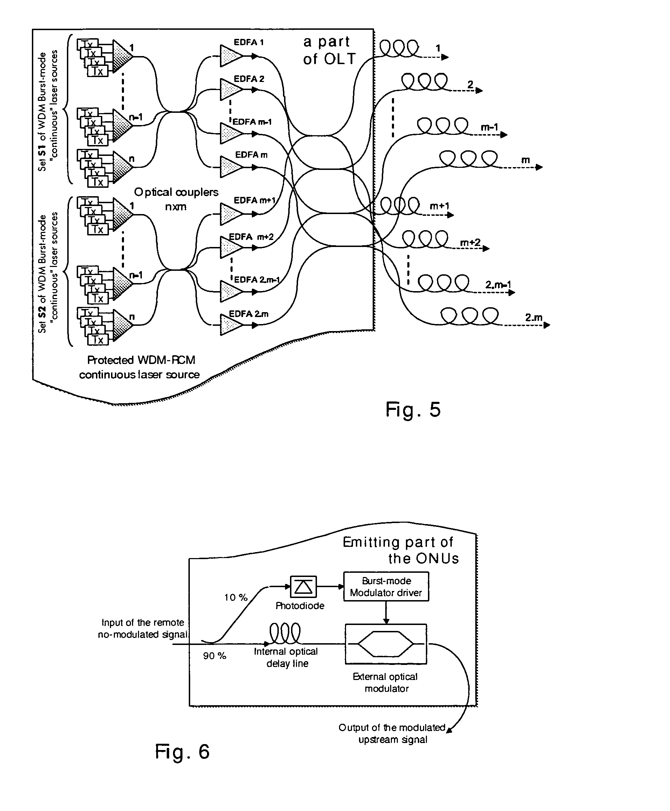

The WDM sets of laser sources can be made up wavelength-fixed burst-mode lasers or wavelength-tunable ones. This last case is interesting to reduce the number of lasers of each set. It is possible to generalize our approach by increasing the number of RCM-PONs sharing the same WDM source. The principle of this idea appears in figure 5.

As it is envisaged that the continuous remote laser source does not arrive anymore permanently in the ONUs, it implies that theses ONUs have a way to detect their arrival. So a small part of the remote signal will be detected in the ONU to activate the modulation of the external modulator. On figure 6 is shown the corresponding layout. The internal optical delay line delays the input signal by a duration corresponding to the processing time of the burst-mode modulator driver.

The advantage of the novel setup according to the present invention has already been explained in the previous paragraph in terms of protection. Here is now quantified its better performance in terms of power budget as compared to the conventional approach that appears in figure 2. Lets consider a RCM-PON connected to 512 RCM-ONUs by the way of 32 wavelengths with 16 ONUs sharing each wavelength. Assuming that the upstream bandwidth is regularly divided between the 16 ONUs using the same upstream wavelength. Also can be considered that the upstream traffic is modulated at 2.5 Gbit/s. It means that avalanche photodiodes could be used in the OLT to receive the upstream packets. At such bit rate, the 10⁻⁹ sensitivity of the current photodiodes is smaller than -33 dBm. To achieve an input power of -30 dBm in the receivers of the OLT and accounting the optical coupler (1:16), the multiplexer (32 ports), the optical transmission line (up to 10 km) and the OLT wavelength demultiplexer (32 ports), the output power of the external modulator of the ONUs should be higher than 3 dBm. To relax the constraint on the power budget we assume that the external modulator of the ONU is amplifying (for instance a Semiconductor optical amplifier SOA or a reflective SOA). Such amplifying modulator should not be saturated by the remote continuous laser signal to carry out a good extinction ratio on the modulated upstream packets. So an input power about -10 dBm is fair to get at the same time a good extinction ratio and a good optical to noise ratio due the amplified spontaneous noise of the amplifying modulator.

In the case of figure 2, accounting the optical device on the line between the OLT and the input port of the RCM-ONU, it results that the power per channel should be 15 dBm at the output of the WDM optical amplifier of the OLT. As 32 channels go through this amplifier permanently, its total output power should be higher than 30 dBm.

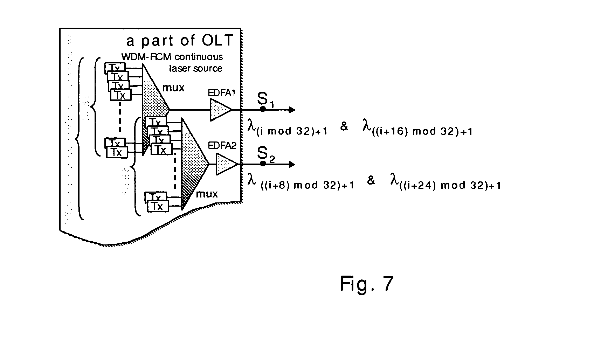

In case of figure 4, as the bandwidth is uniformly distributed between the ONUs, one can assume that the continuous chunks of light sent by the WDM remote source have a T_{λ}/16 duration. Since there are 32 wavelengths and the period of each of them is T_{λ}, the optical amplifiers should process two wavelengths at the same time. To ensure different channels (in terms of wavelength) going through the 2 amplifiers in parallel, it is proposed within the present invention the following wavelength sequence as shown on figure 7. In figure 7, each Erbium Doped Fiber Amplifier (EDFA) only amplifies 2 wavelengths at the same time. As the power per channel should be 16 dBm at the points S1 and S2, the required total output power for these EDFAs is only 22 dBm. This value is 8 dB smaller than the one derived in the conventional setup. Such optical power save is crucial to make the RCM-PON more cost-effective. It is important to notice that in our invention, the combination of 2 optical amplifiers does not contribute to this power save because the insertion loss of the 2x2 optical combiner compensates for it.

This power advantage can still be improved by 3 dB by using a wavelength sequence such as only one channel goes through the amplifiers at once. For instance the EDFA1 sees the channel with the wavelength (i mod 32)+1 while the EDFA2 sees the channel with the wavelength ((i+16) mod 32)+1. However, in case of failure of one of the lasers, the resulting upstream capacity for the corresponding ONUs will be reduced by 50% as compared to the sequence with 2 wavelengths per EDFA at once (the one sketched in figure 7).

Because of the non-permanent emission of the remote laser sources and as the time multiplexing of modulated upstream packet is strongly linked to the time delay induced by the distribution of the lengths of the fiber sections L, the Medium Access Control will be less flexible than the one of a classical PON. And to achieve a fair access of all the ONUs connected to a given optical splitter, the fiber section L of each RCM-ONU should be adjusted so that the optical "continuous" sections come back to the OLT with a time delay proportional to the number of the RCM-ONU that used it to write down its upstream data. So the delay between two upstream time slots coming from two successive RCM-ONUs is constant. To maximize the available upstream capacity between all the RCM-ONUs, the delay between two consecutive ONUs should be T_{λ}/n, where n is the number of ONUs connected to the optical splitter. However such arrangement is not mandatory and one can envisage another length distribution for the different L fiber sections.

At a given moment it appears in fig.3 that several time slots comings from various RCM-ONUs are superimposed. It means that at this moment the OLT can receive data from one of these RCM-ONUs. The OLT delivers to each RCM-ONU time intervals when to write down data in the "continuous" slot they receive. According to the current bandwidth demand of each RCM-ONU these intervals can be more or less long. A part of the "continuous" section not used by a given RCM-ONU (for instance the RCM-ONU number n) could be used by another RCM-ONUs (typically the RCM-ONU number (n-1) or (n+1)) the upstream packet of which also has this part provided that the OLT grants it the access right. For instance when the RCM-ONUs of one RCM-PON are connected to areas exhibiting different traffic profiles (for instance business and residential), this flexibility can adapt the capacity of each RCM-ONU with respect to the moment of the day. Hence the residential RCM-ONUs will need more bandwidth from the end of the afternoon up to the morning. The capacity no allocated by residential RCM-PONs during the rest of the morning and the main part of the afternoon can be intended to the business ones.

## Claims

1. A passive optical network, PON, system comprising an optical line terminal, OLT, with a first light source transmitter for generating first remote optical signals at definite wavelengths, an optical splitter (demux) connected to the first light source transmitter via a first principal optical transmission fiber to distribute each of the first remote optical signals of a specific wavelength via first secondary optical fibers to a plurality of optical network units, ONU, corresponding to subscribers with each an optical modulator to modulate respectively a received remote optical signal according to a data stream to be uploaded via the modulated remote optical signal as an upstream data channel from that ONU to an optical combiner (mux) via one of second secondary optical fibers being part of that PON system before being forwarded to a receiver of the OLT through a second principal optical transmission fiber, the PON system being **characterized by** a second light source transmitter for generating second remote optical signals at the same definite wavelengths, a third principal optical fiber for transmitting the second remote optical signals as a downstream data channel from the second light source transmitter to the optical splitter (demux) to distribute the down-stream data channel of each one of the wavelengths to the plurality of ONUs via the first secondary optical fibers, the first and second transmitters being such that the first and second remote optical signals generated at the OLT for the upstream data channel are emitted non-permanently and that each one of the first remote optical signals carries the same data as one of the second remote optical signals with a same period and with a time shift to avoid interference.

2. The passive optical network according to claim 1 wherein the first and second remote optical signals generated at the OLT for the upstream data channel are modulated by a clock.

3. The passive optical network system according to claim 2 wherein it is based on wavelength division multiplexing technology with n different wavelengths for the remote optical signals while the light source transmitters are adapted to generate the optical signals at different wavelengths within a period T such that every T/n time optical signal of different wavelength is generated.

4. The passive optical network system according to claim 2 wherein each of the two light source transmitters is adapted to generate at the same time optical signals of different wavelengths still being different between the two light source transmitters.

5. An optical line terminal, OLT, for a passive optical network, PON, with a first light source transmitter for generating first remote optical signals at definite wavelengths and transmitting them to an optical splitter (demux) connected to the first light source transmitter via a first principal optical transmission fiber, **characterized by** a second light source transmitter for generating second remote optical signals at the same definite wavelengths and transmitting them via a second principal optical fiber from the second light source transmitter to the optical splitter (demux), the first and second transmitters being such that the first and second remote optical signals generated at the OLT for the upstream data channel are emitted non-permanently and that each one of the first remote optical signals carries the same data as one of the second remote optical signals with a same period and with a time shift to avoid interference.

## Patentansprüche

1. Ein passives optisches Netzwerksystem, PON, welches ein optisches Leitungsendgerät, OLT, umfasst, mit einem ersten Lichtquellensender zum Erzeugen von ersten entfernten optischen Signalen bei festgelegten Wellenlängen, einem optischen Splitter (demux), welcher über eine erste optische Hauptübertragungsfaser an den ersten Lichtquellensender angeschlossen ist, um ein jedes der ersten entfernten optischen Signale einer spezifischen Wellenlänge über erste optische Sekundärfasern an eine Vielzahl von optischen Netzwerkeinheiten, ONU, zu verteilen, welche Teilnehmern mit jeweils einem optischen Modulator zum jeweiligen Modulieren eines empfangenen entfernten optischen Signals gemäß einem Datenstrom, der über das modulierte entfernte optische Signal als ein Aufwärts-Datenkanal von dieser ONU auf einen optischen Kombinator (mux) über eine der zweiten optischen Sekundärfasern, welche Bestandteil dieses PON-Systems sind, hochzuladen ist, bevor sie über eine zweite optische Hauptübertragungsfaser an einen Empfänger des OLT weitergeleitet werden, entsprechen, wobei das PON-System durch einen zweiten Lichtquellensender **gekennzeichnet ist,** um zweite entfernte optische Signale bei den gleichen festgelegten Wellenlängen zu erzeugen, sowie durch eine dritte optische Hauptfaser zum Übertragen der zweiten entfernten optischen Signale als ein Abwärts-Datenkanal von dem zweiten Lichtquellensender an den optischen Splitter (demux), um den Abwärts-Datenkanal einer jeden der Wellenlängen über die ersten optischen Sekundärfasern an die Vielzahl von ONUs zu verteilen, wobei der erste und der zweite Sender derart ausgestaltet sind, dass die ersten und die zweiten an dem OLT für den Aufwärts-Datenkanal erzeugten entfernten optischen Signale nicht permanent gesendet werden, und dass ein jedes der ersten entfernten optischen Signale dieselben Daten transportieren wie eines der zweiten entfernten optischen Signale mit einem selben Zeitraum und mit einer Zeitverschiebung, um Interferenzen zu vermeiden.

2. Das passive optische Netzwerk nach Anspruch 1, wobei die ersten und die zweiten am OLT für den Aufwärts-Datenkanal erzeugten entfernten optischen Signale anhand eines Taktgebers moduliert werden.

3. Das passive optische Netzwerksystem nach Anspruch 2, wobei es auf einer Wellenlängenmultiplex-Technologie mit n verschiedenen Wellenlängen für die entfernten optischen Signale basiert, während die Lichtquellensender fähig sind, die optischen Signale bei unterschiedlichen Wellenlängen innerhalb eines Zeitraums T zu erzeugen, so dass zu jeder Zeit T/n ein optisches Signal mit unterschiedlicher Wellenlänge erzeugt wird.

4. Das passive optische Netzwerksystem nach Anspruch 2, wobei ein jeder der zwei Lichtquellensender fähig ist, gleichzeitig optische Signale mit unterschiedlichen Wellenlängen zu erzeugen, welche auch zwischen den beiden Lichtquellensendern noch unterschiedlich sind.

5. Ein optisches Leitungsendgerät, OLT, für ein passives optisches Netzwerk, PON, mit einem ersten Lichtquellensender zum Erzeugen von ersten entfernten optischen Signalen bei festgelegten Wellenlängen und zum Übertragen dieser Signale an einen optischen Splitter (demux), welcher über eine erste optische Hauptübertragungsfaser an den ersten Lichtquellensender angeschlossen ist, **gekennzeichnet durch** einen zweiten Lichtquellensender zum Erzeugen von zweiten entfernten optischen Signalen bei den gleichen festgelegten Wellenlängen, und zum Übertragen dieser Signale über eine zweite optische Hauptfaser von dem zweiten Lichtquellensender an den optischen Splitter (demux), wobei der erste und der zweite Sender derart ausgestaltet sind, dass die ersten und die zweiten an dem OLT für den Aufwärts-Datenkanal erzeugten entfernten optischen Signale nicht permanent gesendet werden, und dass ein jedes der ersten entfernten optischen Signale dieselben Daten transportiert wie eines der zweiten entfernten optischen Signale mit einem selben Zeitraum und mit einer Zeitverschiebung, um Interferenzen zu vermeiden.

## Revendications

1. Système à réseau optique passif, PON, comprenant un terminal de ligne optique. OLT, muni d'un premier émetteur à source de lumière pour générer des premiers signaux optiques distants à des longueurs d'onde définies, un répartiteur optique (demux) raccordé au premier émetteur à source de lumière par le biais d'une première fibre de transmission optique principale pour distribuer chacun des premiers signaux optiques distants ayant une longueur d'onde spécifique à une pluralité d'unités de réseau optique, ONU, correspondant aux abonnés et chacune munie d'un modulateur optique pour moduler respectivement un signal optique distant reçu conformément à un flux de données à télécharger par le biais du signal optique distant modulé sous la forme d'un canal de données de flux montant de cette ONU vers un combineur optique (mux) par le biais d'une parmi des deuxièmes fibres optiques secondaires faisant partie de ce système PON avant d'être transféré à un récepteur de l'OLT à travers une deuxième fibre de transmission optique principale, le système PON étant **caractérisé par** un deuxième émetteur à source de lumière pour générer des deuxièmes signaux optiques distants aux mêmes longueurs d'onde définies, une troisième fibre optique principale pour émettre les deuxièmes signaux optiques distants sous la forme d'un canal de données de flux descendant du deuxième émetteur à source de lumière vers le répartiteur optique (demux) pour distribuer le canal de données de flux descendant à chacune des longueurs d'onde vers la pluralité d'ONU par le biais des premières fibres optiques secondaires, le premier et le deuxième émetteurs étant tels que le premier et le deuxième signaux optiques distants générés au niveau de l'OLT pour le canal de données de flux montant sont émis de manière non permanente et que chacun des premiers signaux optiques distants transporte les mêmes données que l'un des deuxièmes signaux optiques distants avec une même période et avec un décalage dans le temps pour éviter les interférences.

2. Système à réseau optique passif selon la revendication 1, les premier et deuxième signaux optiques distants générés au niveau de l'OLT pour le canal de données de flux montant étant modulés par une horloge.

3. Système à réseau optique passif selon la revendication 2, celui-ci se basant sur une technologie de multiplexage par répartition en longueur d'onde avec n longueurs d'onde différentes pour les signaux optiques distants alors que les émetteurs à source de lumière sont conçus pour générer les signaux optiques à des longueurs d'onde différentes pendant une période T telle qu'un signal optique de longueur d'onde différente est généré tous les T/n fois.

4. Système à réseau optique passif selon la revendication 2, chacun des deux émetteurs à source de lumière étant conçu pour générer en même temps des signaux optiques de longueurs d'onde différentes étant toujours différentes entre les deux émetteurs à source de lumière.

5. Terminal de ligne optique, OLT, pour un réseau optique passif, PON, muni d'un premier émetteur à source de lumière pour générer des premiers signaux optiques distants à des longueurs d'onde définies et les transmettre à un répartiteur optique (demux) raccordé au premier émetteur à source de lumière par le biais d'une première fibre de transmission optique principale, **caractérisé par** un deuxième émetteur à source de lumière pour générer des deuxièmes signaux optiques distants aux mêmes longueurs d'onde définies et les transmettre par le biais d'une deuxième fibre de transmission optique principale du deuxième émetteur à source de lumière vers le répartiteur optique (demux), le premier et le deuxième émetteurs étant tels que les premier et deuxième signaux optiques distants générés au niveau de l'OLT pour le canal de données de flux montant sont émis de manière non permanente et que chacun des premiers signaux optiques distants transporte les mêmes données que l'un des deuxièmes signaux optiques distants avec une même période et avec un décalage dans le temps pour éviter les interférences.
